# EUROPEAN PATENT APPLICATION

(11) **EP 2 662 137 A1**
(43) Date of publication of application: **13.11.2013**
(21) Application number: 12167107.7
(22) Date of filing: 08.05.2012
(51) Int. Cl.: B01L 3/02, G01N 35/10, B05C 5/02

(54) **Dispensing assembly**

(71) Applicant: Roche Diagnostics GmbH, 68305 Mannheim (DE); F. Hoffmann-La Roche AG, 4070 Basel (CH); Albert-Ludwigs-Universität Freiburg, 79085 Freiburg (DE)
(72) Inventor: Bammesberger, Stefan, 79108 Freiburg (DE); Ernst, Andreas, 79283 Bollschweil (DE); Koltay, Peter, 79117 Freiburg (DE); Losleben, Nadine, 68167 Mannheim (DE); Tanguy, Laurent, 79106 Freiburg (DE)
(74) Representative: Richardt Patentanwälte GbR

(57) **Abstract**

The invention provides for a dispensing assembly (100, 100', 100", 200, 300, 500, 600, 700, 900) comprising a cartridge holder (102). The cartridge holder is operable for receiving a cartridge (108, 108', 108") operable for dispensing a fluid (206). The cartridge comprises a reservoir (114, 804, 908) operable for receiving the fluid. The reservoir comprises an outlet (115, 806). The reservoir has an adjustable volume for forcing the fluid through the outlet. The cartridge further comprises a nozzle (116, 912) for dispensing the fluid. The nozzle is connected to the outlet. the dispensing assembly further comprises an actuator (104) for actuating the adjustable volume. The dispensing assembly further comprises an impulse generator (106) for imparting an impulse to the nozzle.

## Description

### Field of the invention

The invention relates to the dispensing of fluids.

### Background and related art

In medical laboratories, in vitro diagnostics are commonly performed on biological samples. Such tests may be performed manually using pipettes or maybe performed using an automatic analyzer. Automatic analyzers may automatically add reagents to the biological sample and may measure one or more physical properties of the biological sample during analysis. Automatic analyzers are known in the prior art. For example, European patent EP 1 959 257 A2 discloses an automatic analyzer including a reagent cassette holding mechanism for holding a plurality of reagent cassettes.

United States patent US 5,763,278 discloses an automatic pipetting device for small volumes. The device has a pipetting needle and a diluter having a liquid output with a syringe and a valve. The syringe includes a piston and piston drive. Tubing connects the needle and the liquid output of the diluter. An impulse generator is connected to the device and coupled to liquid in the tubing for generating and applying directly to the liquid a mechanical impulse force of at least 0.1 N∘s for separating the liquid from the needle.

### Summary

The invention provides for a dispensing assembly and an automatic analyzer in the independent claims. Embodiments are given in the dependent claims.

A controller as used herein encompasses a device, machine, or apparatus for controlling the operation and/or function of one or more other devices. Examples of a controller may include, but are not limited to: a computer, a processor, an imbedded system or controller, a programmable logic controller, and a microcontroller. A 'computing device' or 'computer' as used herein encompasses to any device comprising a processor. A 'processor' as used herein encompasses an electronic component which is able to execute a program or machine executable instruction.

A 'computer-readable storage medium' as used herein encompasses any tangible storage medium which may store instructions which are executable by a processor of a computing device. The computer-readable storage medium may be referred to as a compufier-readable non-transitory storage medium.

'Computer memory' or 'memory' is an example of a computer-readable storage medium. Computer memory is any memory which is directly accessible to a processor or other controller. 'Computer storage' or 'storage' is an example of a computer-readable storage medium. Computer storage is any non-volatile computer-readable storage medium.

A 'user interface' as used herein is an interface which allows a user or operator to interact with a computer or computer system.

A 'hardware interface' as used herein encompasses a interface which enables a processor or other controller to interact with and/or control an external computing device and/or apparatus. A hardware interface may allow a processor to send control signals or instructions to an external computing device and/or apparatus.

In one aspect the invention provides for a dispensing assembly. The dispensing assembly comprises a cartridge holder. The cartridge holder is operable for receiving a cartridge operable for dispensing a fluid. The cartridge comprises a reservoir operable for receiving the fluid. The reservoir comprises an outlet. The reservoir has an adjustable volume for forcing the fluid through the outlet. In some embodiments the volume of the reservoir may be increased to suck fluid into the reservoir. In some embodiments the volume of the reservoir may also be increased to aspirate liquid through the nozzle. This may be used for example to fill the reservoir.

The cartridge further comprises a nozzle for dispensing the fluid. The nozzle is connected to the outlet. The dispensing assembly further comprises an actuator for actuating the adjustable volume. The dispensing assembly further comprises an impulse generator for imparting an impulse to the nozzle. This embodiment may be beneficial because it may provide a means of dispensing the fluid more accurately. The impulse generator may be able to knock droplets or drops out of the nozzle or off of the nozzle to make the dispensing more reliable and more reproducible.

The impulse generator may take different forms depending on how it is constructed. It may be a piezoelectric actuator and may use such things as a piston or ring for actuating the nozzle. The impulse generator may be pneumatically actuated; this may include a concentric nozzle or a fan jet. The actuator may be an electromagnetically actuated piston and plunger, for example a hard magnet inside of a coil. The impulse generator may further be a piston and plunger actuated by a linear drive or a motor of some sort. The impulse generator may further be an acoustic or ultrasonic impulse generator.

The actuator may take several different forms. In one embodiment the actuator is a syringe pump. However, other such sorts of pumps such as peristaltic pump, a diaphragm pump or other pressure-generating system may also be used. In some embodiments the cartridge comprises a plunger, however this is not necessary. There could be no plunger at all or the plunger could be part of the actuator.

In another embodiment the nozzle is a flexible nozzle.

In another embodiment the cartridge further comprises a piston wherein the piston is operable for changing the volume of the reservoir and for forcing the fluid through the outlet.

In another embodiment the dispensing assembly further comprises a controller for controlling the actuator and the impulse generator.

In another embodiment the dispensing assembly further comprises a meniscus detector for detecting the meniscus of the fluid. The controller is operable for controlling the actuator to force the fluid through the outlet. The controller is further operable for detecting the meniscus using the meniscus detector. The controller is further operable for controlling the actuator to halt the forcing of the fluid through the outlet when the meniscus is in a predetermined location. This embodiment may be beneficial because if the meniscus is in the same place when the fluid dispensing starts then the dispensing of the fluid may be more accurate, more precise and/or more reproducible. The meniscus may be inside or outside the nozzle. For instance the nozzle may be a long tube-like structure and the meniscus may have a particular position within the tube. In other embodiments the meniscus may be formed by a drop of the fluid hanging from the nozzle. So in this case the meniscus may therefore be inside or outside the flexible nozzle. In many applications, the meniscus is preferably positioned right at the orifice of the nozzle.

In another embodiment the controller is further operable for controlling the actuator to force a predetermined volume of fluid through the outlet. In some embodiments the actuator may be controlled to force the predetermined volume after the meniscus is in the predetermined location. The controller is further operable for controlling the impulse generator to impart an impulse to the nozzle after the predetermined volume of fluid is forced through the outlet. This embodiment may be beneficial because it may be used to knock or remove fluid from the nozzle in a controllable and defined fashion; after dispensing this may make the dispensing of the fluid more accurate and more reproducible.

In another embodiment the impulse generator is controlled to impart a predetermined number of impulses of defined duration and force to the nozzle.

In another embodiment the controller is further operable for controlling the actuator to force a predetermined volume of fluid through the outlet. In some embodiments the predetermined volume of fluid may be forced through the outlet after the meniscus is in the predetermined location. The controller is further operable for controlling the impulse generator to impart an impulse to the nozzle during the forcing of the predetermined volume of fluid through the outlet and also after the predetermined volume of fluid is forced through the outlet. In this embodiment an impulse is directed towards the nozzle during and after dispensing of the fluid.

In another embodiment the controller is further operable for controlling the actuator to force a predetermined volume of fluid through the outlet. In some embodiments the actuator may be controlled to force the predetermined volume of fluid through the outlet after the meniscus is in the predetermined location. The controller is further operable for controlling the impulse generator to impart an impulse to the nozzle during the forcing of the predetermined volume of fluid through the outlet.

In another embodiment the controller is further operable to control the actuator to withdraw a second predetermined volume of fluid through the outlet from the nozzle after controlling the impulse generator to impart the impulse. This embodiment may be beneficial because it may be used to withdraw fluid from the nozzle further into the nozzle or even back into the reservoir.

In another embodiment the meniscus detector is any one of the following: a capacitive sensor, an optical sensor and a camera. When the meniscus is inside of the nozzle a capacitive sensor may be used to detect the location of the meniscus. In case the nozzle is optically transparent an optical sensor may also be used to determine the location of the meniscus within the nozzle. If the meniscus extends beyond the nozzle then a capacitive sensor, an optical sensor or a camera may each be used to determine the location of the meniscus.

In another embodiment the nozzle is a flexible nozzle and the dispensing assembly further comprises a valve for compressing the flexible nozzle at a compression location. This embodiment may be beneficial because it enables the flexible nozzle to be sealed. This may prolong the lifetime of the fluid within the reservoir. In some embodiments the valve is a pinch valve.

In another embodiment the nozzle may be operable for receiving a cap for sealing it.

In another embodiment withdrawing the second predetermined volume of the fluid causes the meniscus to withdraw to a withdrawal location within the flexible nozzle. The flexible nozzle has an orifice. The compression location is between the withdrawal location and the orifice. This embodiment may be beneficial because all of the fluid has been withdrawn such that it will be sealed by the valve.

In another embodiment the impulse generator comprises an actor for contacting the nozzle. The actor may be used for imparting the impulse to the nozzle or may be considered to attach or detach the impulse generator to the nozzle.

In another embodiment the dispensing assembly comprises the cartridge.

In another embodiment the cartridge comprises the fluid.

In another embodiment the fluid comprises a reagent.

In another embodiment the fluid comprises a blood grouping reagent.

In another embodiment the fluid comprises a solvent.

In another embodiment the fluid comprises a diluent.

In another embodiment the fluid comprises a catalyst.

In another embodiment the fluid comprises an antibody.

In another embodiment the fluid comprises an enzyme.

In another embodiment the fluid comprises a recombinant protein.

In another embodiment the fluid comprises a virus isolate.

In another embodiment the fluid comprises a virus.

In another embodiment the fluid comprises a biological reagent.

In another embodiment the fluid comprises a protein.

In another embodiment the fluid comprises a salt.

In another embodiment the fluid comprises a detergent.

In another embodiment the fluid comprises a nucleic acid.

In another embodiment the fluid comprises an acid.

In another embodiment the fluid comprises a base.

In another embodiment the fluid comprises a dispersion such as a dispersion of particles within the fluid.

In another embodiment the fluid comprises latex particles.

In another embodiment the fluid comprises nanoparticles.

In another embodiment the fluid comprises magnetic particles.

In another embodiment the cartridge comprises a syringe. For instance the syringe may be connected to a nozzle and a syringe pump may be used as the actuator for actuating the syringe.

In another embodiment the actuator is a syringe pump.

In another aspect the invention provides for an automatic analyzer for analyzing the biological sample comprising a dispensing assembly according to an embodiment of the invention.

### Brief description of the drawings

In the following embodiments of the invention are explained in greater detail, by way of example only, making reference to the drawings in which:
- Fig. 1: illustrates a dispenser assembly according to an embodiment of the invention.
- Fig. 2: illustrates a dispenser assembly according to a further embodiment of the invention;
- Fig. 3: illustrates a dispenser assembly according to a further embodiment of the invention;
- Fig. 4: illustrates an automatic analyzer according to an embodiment of the invention;
- Fig. 5: illustrates a dispenser assembly according to a further embodiment of the invention;
- Fig. 6: illustrates a dispenser assembly according to a further embodiment of the invention;
- Fig. 7: illustrates a dispenser assembly according to a further embodiment of the invention;
- Fig. 8: illustrates an example of a tube and a piston which are used to form a reservoir; and
- Fig. 9: illustrates a dispenser assembly according to a further embodiment of the invention.

### Detailed description

Like numbered elements in these figures are either equivalent elements or perform the same function. Elements which have been discussed previously will not necessarily be discussed in later figures if the function is equivalent.

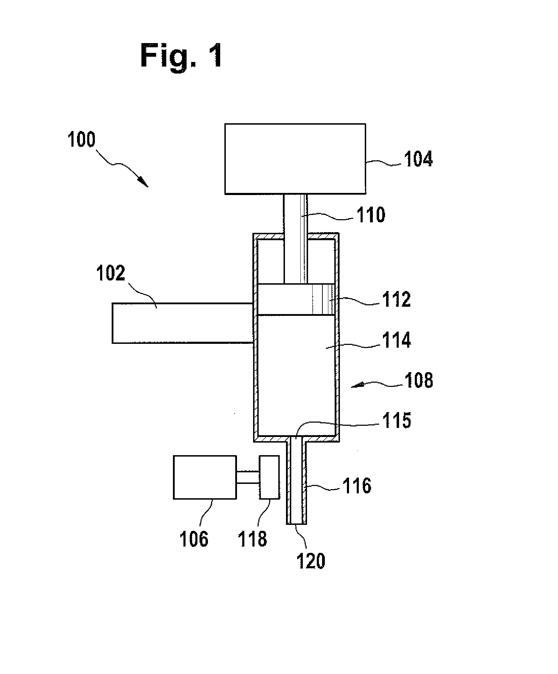

Fig. 1 illustrates a dispenser assembly 100 according to an embodiment of the invention. The dispensing assembly 100 comprises a cartridge holder 102, an actuator 104 and an impulse generator 106. The cartridge holder 102 is shown as being attached to a cartridge 108. The actuator 104 in this example is shown as having a plunger 110 in contract with a piston 112. The plunger 110 and piston 112 may not be present in all embodiments. Depending upon the implementation the plunger 110 and/or the piston 112 could be components of the dispenser assembly 100 or the cartridge 108. The cartridge 108 in this embodiment has a reservoir 114 whose size is controlled by the piston 112. Moving the piston 112 makes the reservoir 114 larger or smaller. The reservoir 114 has an outlet 115 into a nozzle 116. The impulse generator 106 has an actor 118 which is able to come in physical contact with the nozzle 116. The piston 112 is able to be depressed to force fluid from the reservoir 114 through the nozzle 116. This enables fluid to be forced out of an orifice 120 in the nozzle 116. The impulse generator 106 is able to use the actor 118 to physically contact the nozzle 116 to knock droplets out of the nozzle 116.

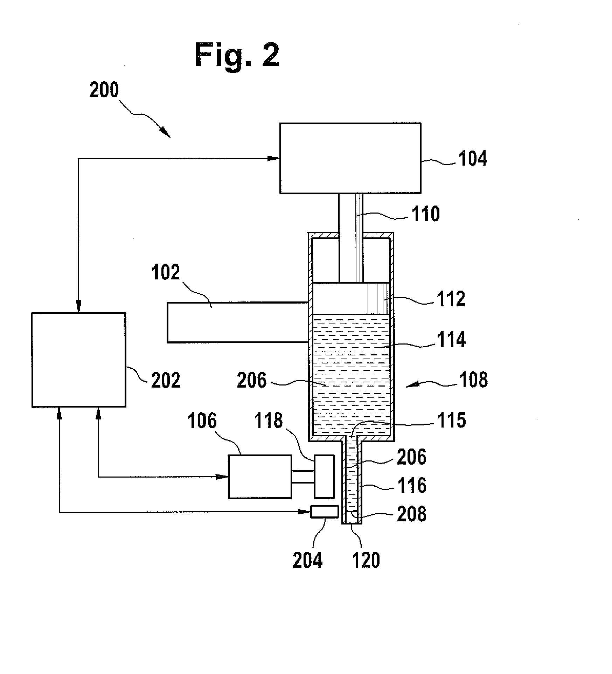

Fig. 2 shows a further example of a dispenser assembly 200 according to an embodiment of the invention. This embodiment is similar to that shown in Fig. 1 except in this case the dispenser assembly 200 further comprises a controller 202 and a meniscus detector 204. The controller 202 is a controller or other control apparatus which is adapted for controlling the actuator 104, the impulse generator 106 and the meniscus detector 204. The meniscus detector 204 is adapted for detecting a meniscus 208 in the nozzle 116. The reservoir 114 and the nozzle 116 are shown as containing a fluid 206. With the meniscus detector 204 the controller 202 is able to control the actuator 104 such that the piston 112 is depressed the right amount to position the meniscus 208 in a precise location. Doing this before beginning the dispensing process the dispenser apparatus 200 is able to more accurately dispense the proper amount of fluid 206.

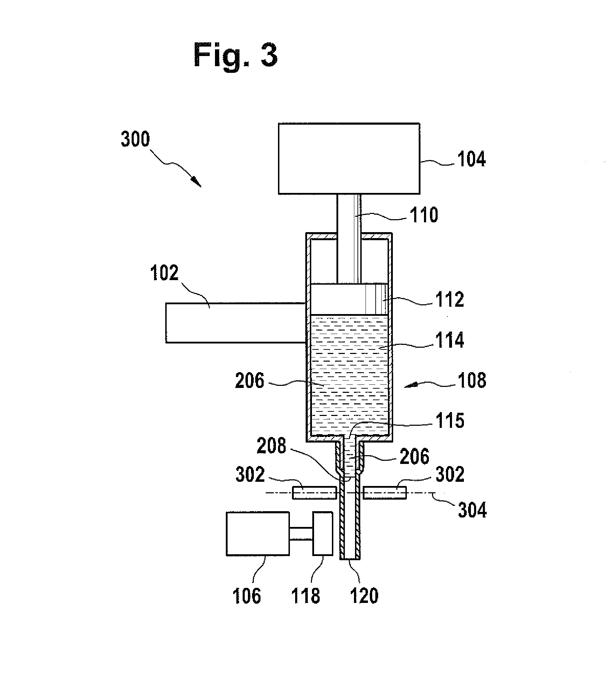

Fig. 3 shows a dispenser assembly 300 according to a further embodiment of the invention. The embodiment shown in Fig. 3 is similar to that shown in Figs. 1 and 2. In this embodiment the dispenser assembly 300 comprises a pinch valve 302 and the nozzle 116 is flexible. The pinch valve 302 is adapted for squeezing and pinching closed the flexible nozzle 116 at a compression location 304. This location at which the pinch valve closes the flexible nozzle 116 is marked by the dashed line.. In this example it can be seen that the compression location 304 is between the orifice 120 and the fluid meniscus 208. When the pinch valve 302 closes the entire volume of the fluid 206 will be sealed from the atmosphere.

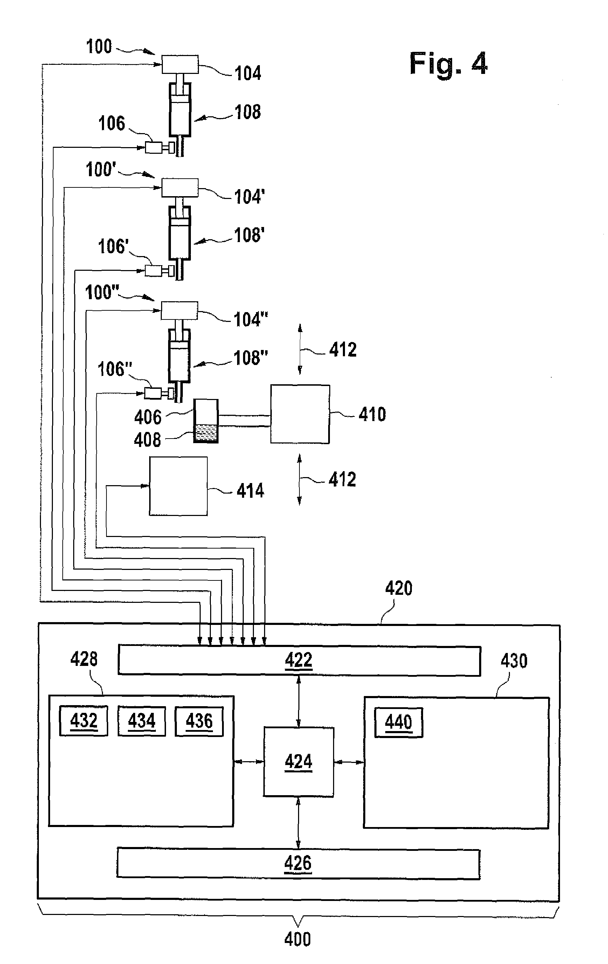

Fig. 4 illustrates an automatic analyzer 400 according to an embodiment of the invention. This automatic analyzer is shown as having three cartridges 108, 108' and 108". There is an dispenser assembly 100 connected to cartridge 108. There is an dispenser assembly 100' attached to cartridge 108'. There is an dispenser assembly 100" attached to cartridge 108". The dispenser assemblies 100, 100', and 100" are equivalent to the dispenser assembly 100 shown in Fig. 1. However not all components of the dispenser assembly are detailed in Fig. 4.

The automatic analyzer 400 is shown as having a relative movement means 410 which provides relative movement 412 between a sample holder 406 and the cartridges 108, 108' and 108". The sample holder 406 is shown as containing a biological sample 408. The cartridges 108, 108', 108" may be used to add one or more fluids to the biological sample 408. The automatic analyzer 400 is shown as further containing a sensor system 414. The sensor system comprises one or more sensors for measuring a physical quantity or physical property of the biological sample 408. For example the sensor system 414 may comprise an NMR system, an optical transmission or reflectance measurement system, a spectrometric measurement system, an electrochemical or optical sensor, a pH meter, a camera system, and a chromatography system. The relative movement means 410 is also operable for moving the sample holder 406 to the sensor system 414.

The arrangement of the cartridges 108, 108', 108" and the sensor system 414 is representative. In some embodiments the sample holder 406 may remain in a fixed position and the cartridges 108, 108', 108" may move. Each cartridge 108, 108', 108" is shown as being installed in a dispenser assembly 100, 100', 100".

The dispenser assemblies 100, 100', 100" each comprise an impulse generator 106, 106', 106"and an actuator 104, 104', 104". The impulse generators 106, 106', 106", the actuators 104, 104', 104", and the sensor system 414 are shown as being connected to a hardware interface 422 of a computer system 420. The computer system 420 functions as a controller for the automatic analyzer 400. The computer 420 is further shown as containing a processor 424 which is able to control the operation and function of the automatic analyzer 400 using the hardware interface 422. The processor 424 is shown as further being connected to a user interface 426, computer storage 428 and computer memory 430. The computer storage 428 is shown as containing an analysis request 432. The analysis request 432 contains a request to analyze the biological sample 408.

The computer storage 428 is shown as further containing sensor data 434 received from the sensor system 414. The computer storage 428 is shown as further containing an analysis result 436 which was determined using the sensor data 434. The computer memory 430 contains a control module 440. The control module 440 contains computer executable code which enables the processor 424 to control the operation and function of the automatic analyzer 400. For instance the control module 440 may use the analysis request 432 to generate commands to generate and send to the dispenser assemblies 100, 100', 100", the sensor system 414 and the relative movement system 410. The control module 440 may also generate the analysis result 436 using the sensor data 434.

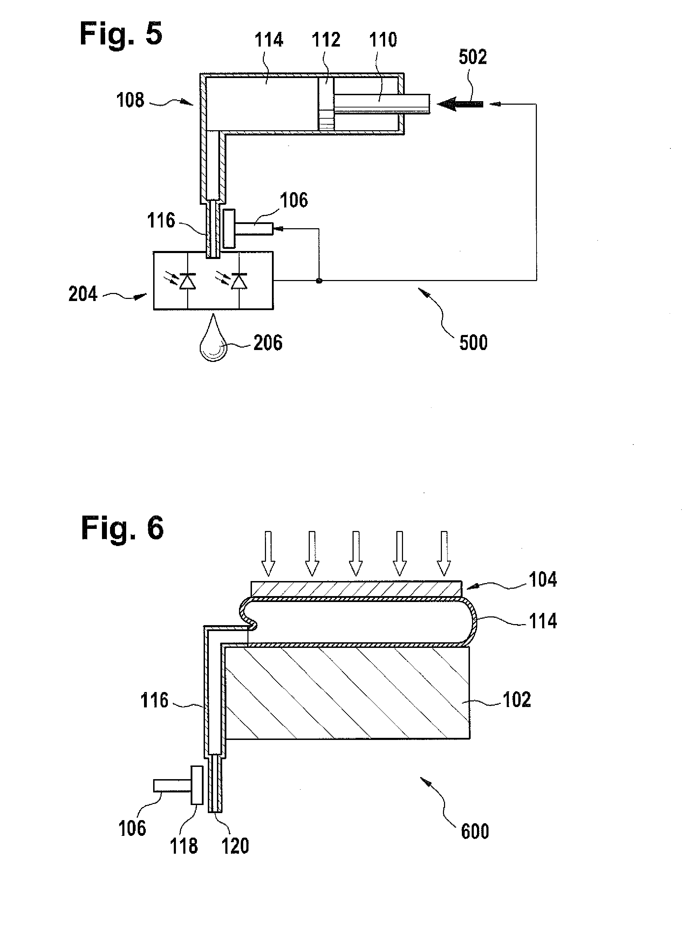

Fig. 5 shows a functional diagram of a dispenser assembly 500 according to a further embodiment of the invention. The embodiment shown in Fig. 5 is similar to that shown in Figs. 1, 2 and 3. In this example a syringe pump 502 is used as the actuator. In this example an optical detector is used as the meniscus detector 204, it may also be used to measure droplets of fluid 206 exiting from the nozzle 116.

Fig. 6 shows a dispenser assembly 600 according to an alternative embodiment of the invention. In this embodiment there is a reservoir 114 that is bag-like and the actuator 104 exerts pressure directly on the reservoir 114 to force liquid out of the orifice 120. The bag-like reservoir 114 is squeezed between the actuator 104 and the cartridge holder 102.

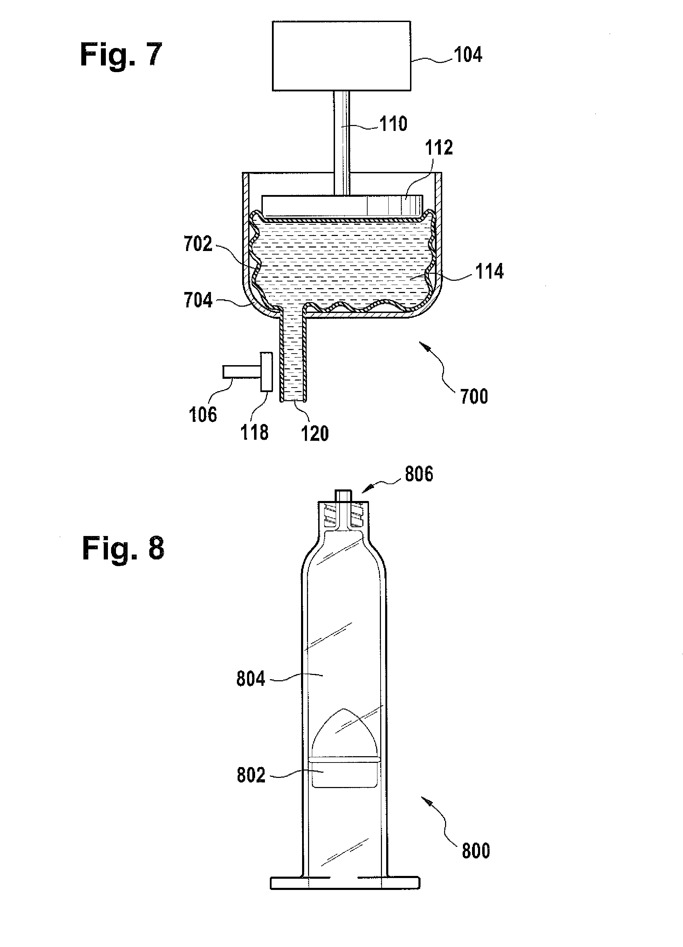

Fig. 7 shows a dispenser assembly 700 according to a further embodiment of the invention. This embodiment is similar to the embodiments shown in Figs. 1, 2, 3 and 5. In this case the reservoir 114 is formed by a bag 702 which is contained within a bag support 704. The plunger 112 is used to compress the bag 702 and force fluid out of the orifice 120.

Fig. 8 shows an example of a tube 800 and a piston 802 which are used to form a reservoir 804. The reservoir 804 has an outlet 806. In this embodiment the piston 802 could be actuated by a plunger attached to an actuator. In this embodiment the outlet 806 is shown as have an Luer-Lock connection.

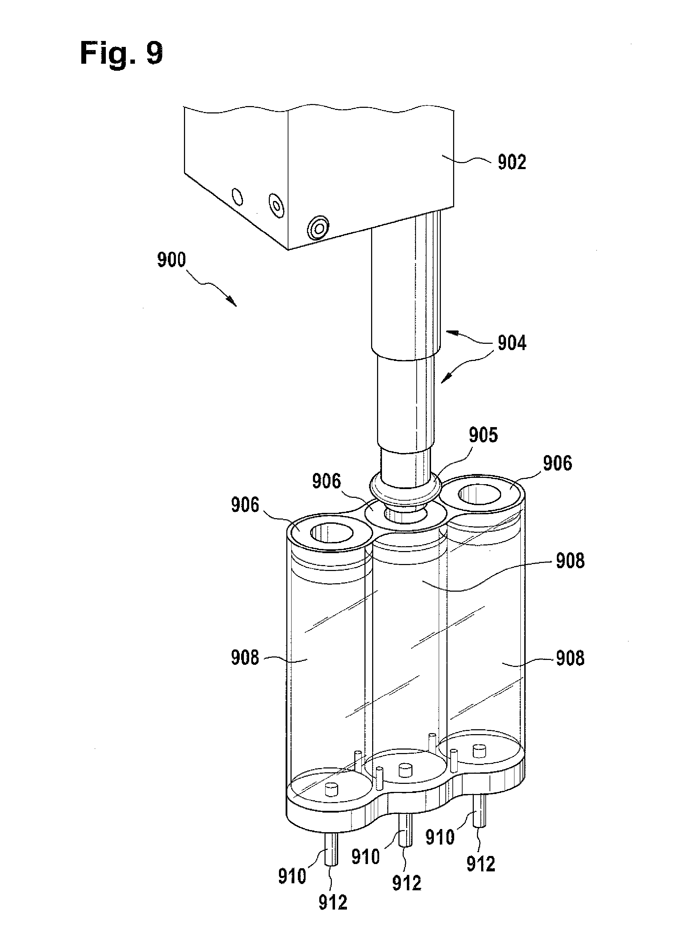

Fig. 9 illustrates a further example of a dispenser assembly 900 according to an embodiment of the invention. In this embodiment there is a syringe pump 902 which functions as the actuator 104. There is a plunger 904 which is actuated by the syringe pump 902. The inflatable gripper 905 on the end of the plunger 904 is able to grab pistons 906 each of which are mounted at the end of the reservoirs 908. The plunger 904 is then able to move a piston back and forth to change the volume of the reservoir 908. At the bottom of the reservoir 908 is a nozzle 910 with an orifice 912 through which fluid is forced out of. As an alternative to the inflatable gripper 905, other types of grippers; e.g., holding the piston by vacuum, electromagnetic holding systems, and etc.; could be used

In another embodiment a robotic arm could move the cartridge from a parking to a dispensing position and vice versa.

In another embodiment a contact or distance sensor could be integrated into the plunger to detect the distance to the piston when the piston is to be contacted by the plunger. If the plunger is part of the cartridge, a finger gripper with a contact sensor could be added to contact the plunger.

In another embodiment the impulse generator may be put in contact with the nozzle before an impulse is generated by the impulse generator. After the dispensing process, the impulse generator may be removed to a sufficient distance in order to be able to remove the cartridge without touching the impulse generator with the orifice or the reagent. This may help to eliminate or reduce cross contamination. For this automation purpose an additional actor may be beneficial. For example, a pneumatic linear actuator may be used.

### List of reference numerals

- 100: dispenser assembly
- 100': dispenser assembly
- 100": dispenser assembly
- 102: cartridge holder
- 104: actuator
- 106: impulse generator
- 108: cartridge
- 110: plunger
- 112: piston
- 114: reservoir
- 115: outlet
- 116: nozzle
- 118: actor
- 120: orifice
- 200: dispenser assembly
- 202: controller
- 204: meniscus detector
- 206: fluid
- 208: meniscus
- 300: dispenser assembly
- 302: pinch valve
- 304: compression location
- 400: automatic analyzer
- 402: cartridge
- 402': cartridge
- 402": cartridge
- 406: sample holder
- 408: biological sample
- 410: relative movement means
- 412: relative movement
- 414: sensor system
- 420: computer
- 422: hardware interface
- 424: processor
- 426: user interface
- 428: computer storage
- 430: computer memory
- 432: analysis request
- 434: sensor data
- 436: analysis result
- 440: control module
- 500: dispenser assembly
- 502: syringe pump
- 600: dispenser assembly
- 700: dispenser assembly
- 702: bag
- 704: bag support
- 800: tube
- 802: piston
- 804: reservoir
- 806: outlet
- 900: dispenser assembly
- 902: syringe pump
- 904: plunger
- 905: inflatable gripper
- 906: piston
- 908: reservoir
- 910: nozzle
- 912: orifice

## Claims

1. A dispensing assembly (100, 100', 100", 200, 300, 500, 600, 700, 900) comprising:
- a cartridge holder (102), wherein the cartridge holder is operable for receiving a cartridge (108, 108', 108") operable for dispensing a fluid (206), wherein the cartridge comprises a reservoir (114, 804, 908) operable for receiving the fluid, wherein the reservoir comprises an outlet (115, 806), wherein the reservoir has an adjustable volume for forcing the fluid through the outlet, wherein the cartridge further comprises a nozzle (116, 912) for dispensing the fluid, wherein the nozzle is connected to the outlet;
- an actuator (104) for actuating the adjustable volume; and
- impulse generator (106) for imparting an impulse to the nozzle.

2. The dispensing assembly of claim 1, wherein the dispensing assembly further comprises a controller (202, 420) for controlling the actuator and the impulse generator.

3. The dispensing assembly of claim 2, wherein the dispensing assembly further comprises a meniscus detector (204) for detecting a meniscus (208) of the fluid, wherein the controller is operable for:
- controlling the actuator to force fluid through the outlet;
- detecting the meniscus using the meniscus detector; and
- controlling the actuator to halt the forcing of fluid through the outlet when the meniscus is in a predetermined location.

4. The dispensing assembly of claims 3, wherein the meniscus detector is any one of the following: a capacitive sensor, an optical sensor, and a camera.

5. The dispensing assembly of claim 2, 3, or 4, wherein the controller is further operable for:
- controlling the actuator to force a predetermined volume of fluid through the outlet;
and
- controlling the impulse generator to impart an impulse to the nozzle after the predetermined volume of fluid is forced through the outlet.

6. The dispensing assembly of claim 2, 3, or 4, wherein the controller is further operable for:
- controlling the actuator to force a predetermined volume of fluid through the outlet;
and
- controlling the impulse generator to impart an impulse to the nozzle during the forcing of the predetermined volume fluid through the outlet and after the predetermined volume of fluid is forced through the outlet.

7. The dispensing assembly of claim 2, 3, or 4, wherein the controller is further operable for:
- controlling the actuator to force a predetermined volume of fluid through the outlet;
and
- controlling the impulse generator to impart an impulse to the nozzle during the forcing of the predetermined volume fluid through the outlet.

8. The dispensing assembly of any one of claims 2 through 7, wherein the controller is operable to control the actuator to withdraw a second predetermined volume of fluid through the outlet from the nozzle after controlling the impulse generator to impart the impulse.

9. The dispensing assembly of any one of the preceding claims, wherein the dispensing assembly further comprises a valve (302) for sealing the nozzle at a sealing location (304).

10. The dispensing assembly of claim 9, wherein withdrawing the second predetermined volume of fluid causes a meniscus of the fluid within nozzle to withdraw to a withdrawal location, and wherein the nozzle has an orifice (120), and wherein the sealing location is between the withdrawal location and the orifice.

11. The dispensing assembly of any one of the preceding claims, wherein the impulse generator comprises an actor (118) for contacting the nozzle.

12. The dispensing assembly of any one of the preceding claims, wherein the dispensing assembly comprises the cartridge.

13. The dispensing assembly of any one of the preceding claims, wherein the fluid comprises any one of the following: a reagent, a blood grouping reagent, a solvent, a diluent, a catalyst, an antibody, an enzyme, a recombinant protein, a virus isolate, a virus, a biological reagent, a protein, a salt, a detergent, a nucleic acid, an acid, a base, a dispersion, latex particles, nano particles, magnetic particles, and combinations thereof.

14. The dispensing assembly of any one of the preceding claims, wherein the cartridge comprises a syringe.

15. An automatic analyzer (400) for analyzing a biological sample (408) comprising a dispensing assembly according to any one of the preceding claims.
